(19) Europäisches Patentamt
European Patent Office
Office européen des brevets

(11) **EP 1 370 857 B1**

(12) **EUROPÄISCHE PATENTSCHRIFT**

(45) Veröffentlichungstag und Bekanntmachung des Hinweises auf die Patenterteilung:
**14.03.2018  Patentblatt 2018/11**

(21) Anmeldenummer: 02708152.0

(22) Anmeldetag: **19.01.2002**

(51) Int Cl.:
*G01N 27/404* *(2006.01)*      *H01M 10/48* *(2006.01)*
*G08B 17/10* *(2006.01)*      *G01N 27/416* *(2006.01)*

(86) Internationale Anmeldenummer:
**PCT/DE2002/000163**

(87) Internationale Veröffentlichungsnummer:
**WO 2002/073182 (19.09.2002 Gazette 2002/38)**

(54) **VERFAHREN ZUM BETRIEB EINER AUSWERTESCHALTUNG FÜR EINE ELEKTROCHEMISCHE ZELLE**

METHOD FOR THE OPERATION OF AN ANALYTICAL CIRCUIT FOR AN ELECTROCHEMICAL CELL

PROCEDE DE FONCTIONNEMENT D'UN CIRCUIT D'EVALUATION POUR UNE CELLULE ELECTROCHIMIQUE

(84) Benannte Vertragsstaaten:
**CH DE FR GB IT LI**

(30) Priorität: **09.03.2001  DE 10111264**

(43) Veröffentlichungstag der Anmeldung:
**17.12.2003  Patentblatt 2003/51**

(73) Patentinhaber: **ROBERT BOSCH GMBH**
**70442 Stuttgart (DE)**

(72) Erfinder:
• **PFEFFERSEDER, Anton**
**82054 Sauerlach-Arget (DE)**
• **SIBER, Bernd**
**85625 Glonn (DE)**
• **HENSEL, Andreas**
**71665 Vaihingen (DE)**
• **OPPELT, Ulrich**
**85604 Zorneding (DE)**

(56) Entgegenhaltungen:
EP-A- 0 269 794      EP-A- 0 417 347
WO-A-98/50789      GB-A- 2 079 474
GB-A- 2 176 296      GB-A- 2 335 042
GB-A- 2 343 518

**Beschreibung**

Stand der Technik

Die Erfindung geht aus von einem Verfahren zum Betrieb einer Auswerteschaltung für eine elektrochemische Zelle nach der Gattung des unabhängigen Patentanspruchs.
Es ist bereits bekannt, elektrochemische Zellen als Gassensoren zu verwenden.

Vorteile der Erfindung

Aus der Europäischen Patentanmeldung EP 0 269 794 A2 ist ein Verfahren und eine Vorrichtung zum Betrieb einer elektrochemischen Zelle bekannt, wobei ein Schalter eine Verbindung zu einer externen Schaltung periodisch öffnet und schließt. Bei geschlossenem Schalter wird die Spannung über der Zelle mit einer Schwellspannung verglichen, und die Differenz dazwischen wird gemessen, um die Höhe der Überschußladung auf der Zelle (30) zu bestimmen. Die Patentanmeldung GB 2 343 518 A offenbart ein Verfahren zum Betreiben einer elektrochemischen Messzeller. Um die Zelle betriebsbereit zu halten, so dass sie schneller in Betrieb gesetzt wird, wenn eine Messspannung angelegt wird, werden in Intervallen Spannungsimpulse an die Zelle angelegt.
Das erfindungsgemäße Verfahren zum Betrieb einer Auswerteschaltung für eine elektrochemische Zelle mit den Merkmalen des unabhängigen Patentanspruchs hat demgegenüber den Vorteil, dass die Auswerteschaltung und damit die elektrochemische Zelle gepulst betrieben wird, wobei die Zeit, während der die Auswerteschaltung ausgeschaltet ist, länger ist als die, während der die Auswerteschaltung eingeschaltet ist. Dies führt zu einem geringeren Stromverbrauch, so dass beispielsweise mehr Brandmelder an eine Linie anschließbar sind beziehungsweise der technische Aufwand zur Bereitstellung einer Notstromversorgung für die Brandmeldeanlage geringer wird. Beim gepulsten Betrieb der Auswerteschaltung ist ein Stromverstärker mit hohem Verbrauch anschließbar, der günstiger und einfacher herzustellen ist als ein Stromverstärker mit geringem Stromverbrauch, da in den Zeiten, in denen die Auswerteschaltung eingeschaltet ist, der Stromverbrauch vergleichsweise hoch sein kann aber im Mittel eben sehr niedrig ist. Darüber hinaus wird durch das Tastverhältnis von Ausschaltzeit zu Einschaltzeit eine Verstärkung der Gasempfindlichkeit für die elektrochemische Zelle als Gassensor erreicht.
Durch die in den abhängigen Ansprüchen aufgeführten Maßnahmen und Weiterbildungen sind vorteilhafte Verbesserungen des im unabhängigen Patentanspruch angegebenen Verfahrens zum Betrieb einer Auswerteschaltung für eine elektrochemische Zelle möglich.
Besonders vorteilhaft ist, dass die Einschaltzeit kleiner als die Entladungszeit gewählt wird, so dass sich nach Einschalten der erfindungsgemäßen Vorrichtung ein Gleichgewicht von in der Ausschaltzeit angesammelter Ladung in der elektrochemischen Zelle und in der Einschaltzeit abfließender Ladung von der elektrochemischen Zelle einstellt. Dabei wird die Ausschaltzeit so gewählt, dass die in der elektrochemischen Zelle gespeicherte Ladung linear proportional zur Gaskonzentration ist.
Darüber hinaus ist es von Vorteil, dass eine Vorrichtung zur Durchführung des erfindungsgemäßen Verfahrens vorliegt, die aus einer elektrochemischen Zelle, einer Auswerteschaltung mit einem Stromverstärker und einem Schalter, der zur Ein- und Ausschaltung der Energieversorgung der Auswerteschaltung dient, besteht. In einer Weiterbildung ist vorgesehen, dass die elektrochemische Zelle auch eine Referenzelektrode aufweist, die mit einem Potentiostaten verbunden ist, mit dessen Hilfe ein Potential an der Meßelektrode einstellbar ist.
Schließlich ist es auch von Vorteil, dass das erfindungsgemäße Verfahren bzw. die erfindungsgemäße Vorrichtung in einem Brandmelder einsetzbar ist, wobei die elektrochemische Zelle als Gassensor für Brandgase eingesetzt wird.

Zeichnung

Ausführungsbeispiele der Erfindung sind in der Zeichnung dargestellt und werden in der nachfolgenden Beschreibung näher erläutert. Es zeigt

Figur 1 ein erstes Blockschaltbild der erfindungsgemäßen Vorrichtung,
Figur 2 ein zweites Blockschaltbild der erfindungsgemäßen Vorrichtung,
Figur 3 ein drittes Blockschaltbild der erfindungsgemäßen Vorrichtung,
Figur 4 ein Flußdiagramm des erfindungsgemäßen Verfahrens und
Figur 5 ein Spannungszeitdiagramm der Versorgungsspannung der Auswerteschaltung.

Beschreibung

Elektrochemische Zellen sind Sensoren, mit denen die Konzentration eines Gases in der Luft bestimmt werden kann. Dabei handelt es sich um Sensoren, bei denen das nachzuweisende Gas im Sensor eine chemische Reaktion auslöst, bei der ein elektrischer Strom erzeugt wird. Die Sensoren, also die elektrochemischen Zellen, weisen eine Meß- und eine Gegenelektrode auf, die zum Abgreifen des elektrischen Stromes dienen. Aus der Größe des zwischen der Meß- und Gegenelektrode fließenden Stroms I, der in der Regel proportional zur Gaskonzentration c ist ($I = e * c$, e: Gasempfindlichkeit der elektrochemischen Zelle, beispielsweise in nA/ppm) kann die Gaskonzentration bestimmt werden. Es gibt auch Ausführungsformen von elektrochemischen Zellen, die zusätzlich mit einer Referenzelektrode ausgestattet sind, mit der das Potential der Meßelektrode stabilisiert bzw. ein bestimmtes Potential an der Meßelektrode eingestellt werden kann. Das Einstellen einer bestimmten Potentialdifferenz zwischen Meß- und Gegenelektrode kann z.B. zum Messen bestimmter Gasarten erforderlich sein, da die Empfindlichkeit auf eine Gasart unter anderem von der Potentialdifferenz abhängen kann.

Wird eine Referenzelektrode verwendet, dann wird die Referenzelektrode an einen Eingang eines Potentiostaten angeschlossen und der Ausgang des Potentiostats an die Gegenelektrode der elektrochemischen Zelle. Der Ausgang des Potentiostaten beeinflusst nun die Gegenelektrode so, dass sich an der Meßelektrode das gewünschte Potential einstellt. Werden jedoch nur zwei Elektroden, also die Meß- und Gegenelektrode, verwendet, dann ist in der elektrischen Auswerteschaltung nur ein Stromverstärker erforderlich.

Wird die elektrochemische Zelle von der Auswerteschaltung getrennt, dann kann der von der elektrochemischen Zelle erzeugte Strom nicht mehr fließen. Dasselbe geschieht, wenn die Auswerteschaltung von der Spannungsversorgung getrennt wird und im ausgeschalteten Zustand hochohmige Eingänge aufweist. In beiden Fällen beginnt sich die elektrochemische Zelle zu polarisieren, d.h. es bildet sich eine Spannung zwischen Meß- und Gegenelektrode aus. Beim erneuten Verbinden der elektrochemischen Zelle mit der Auswerteschaltung bzw. Einschalten der Spannungsversorgung muß die in der elektrochemischen Zelle gespeicherte Ladung erst über den Stromverstärker abfließen, bevor die Auswerteschaltung ein der Gaskonzentration entsprechendes Signal liefert. Das bedeutet, dass die Auswerteschaltung erst eine gewisse Zeit nach dem Einschalten ein der momentanen Gaskonzentration entsprechendes Signal liefert. Deshalb wird bei Anwendung von elektrochemischen Zellen, bei denen eine Gaskonzentration über eine lange Zeitdauer mit einer hohen Abtastrate gemessen werden muß, die Auswerteschaltung üblicherweise ohne Unterbrechung mit Spannung versorgt.

Elektrochemische Zellen können beispielsweise in einem Brandmelder eingesetzt werden, um Gase bei einem Brand zu detektieren. Gerade bei dieser Anwendung ist es erforderlich, dass die Auswerteschaltung nur einen sehr geringen Stromverbrauch aufweist. Erfindungsgemäß wird nun ein Verfahren zum Betrieb einer Auswerteschaltung für eine elektrochemische Zelle vorgeschlagen, die einen geringen Stromverbrauch der Auswerteschaltung aufweist. Dazu wird die Auswerteschaltung periodisch für eine Zeitdauer Ta ausgeschaltet und für eine Zeitdauer Te eingeschaltet. Damit verringert sich der Stromverbrauch der Schaltung um das Tastverhältnis Te dividiert durch Ta. Es wird dabei ausgenutzt, dass die elektrochemische Zelle die bei der chemischen Reaktion erzeugte Ladungsmenge speichert, wenn diese nicht über eine Meß- und Gegenelektrode abfließen kann. Wird die Auswerteschaltung für die Zeitdauer Ta ausgeschaltet, dann ist die während dieser Zeitdauer in der elektrochemischen Zelle gespeicherte Ladung proportional zur Gaskonzentration und zur Ausschaltdauer Ta:

$$Q1 = e * c * Ta$$

Dies ist nur der Fall, wenn die Ausschaltdauer so klein gewählt wird, dass die entstehende Polarisationsspannung, die die Gasempfindlichkeit der elektrochemischen Zelle beeinflussen kann, klein bleibt. Wird die Auswerteschaltung wieder eingeschaltet, dann fließt, wenn die Zeitkonstante des Entladevorgangs größer als die Einschaltdauer ist, während der Einschaltdauer Te die Ladung

$$Q2 = I * Te$$

Wenn das Ein- und Ausschalten periodisch wiederholt wird, dann wird sich die Polarisationsspannung der elektrochemischen Zelle so lange erhöhen, bis die bei der eingeschalteten Auswerteschaltung abfließende Ladungsmenge gleich groß ist wie die bei der ausgeschalteten Auswerteschaltung erzeugte Ladungsmenge. Im Gleichgewicht fließt daher bei eingeschalteter Auswerteschaltung ein Strom der Größe

$$I = e * c * Ta/Te$$

Durch Messen dieses Stroms kann wiederum die Konzentration des nachzuweisenden Gases bestimmt werden. Neben dem geringen Stromverbrauch liegt damit ein weiterer Vorteil des erfindungsgemäßen Verfahrens darin, dass die Gasempfindlichkeit der elektrochemischen Zelle um das Tastverhältnis Ta/Te verstärkt wird.

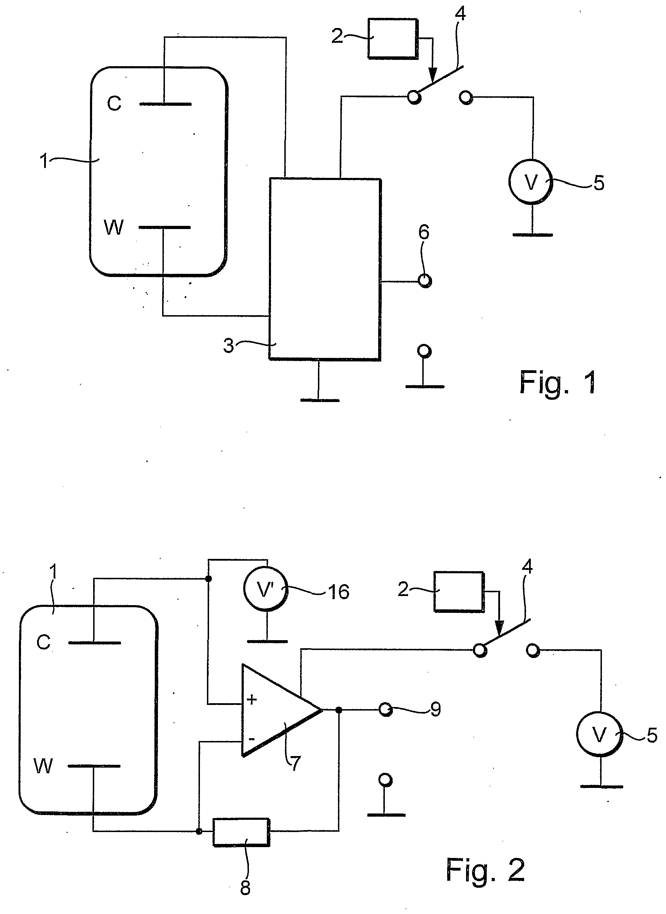

In Figur 1 ist ein erstes Blockschaltbild der erfindungsgemäßen Vorrichtung dargestellt. Eine elektrochemische Zelle weist eine Gegenelektrode C und eine Meßelektrode W auf. Die elektrochemische Zelle 1 ist über die Elektroden C und W an Eingänge eines Stromverstärkers (Current Amplifier) 3 angeschlossen. Der Stromverstärker 3 ist auf der einen Seite seiner Spannungsversorgungsanschlüsse gegen Masse angeschlossen und auf der anderen Seite mit einem Schalter 4 verbunden. Der Schalter 4 wird von einer Ansteuerelektronik 2 für die Einschaltzeit Te geschlossen und die Ausschaltzeit Ta geöffnet.

Auf der anderen Seite des Schalters 4 ist eine Spannungsversorgung 5 angeschlossen, die wiederum auf ihrer anderen Seite gegen Masse geschlossen ist. Am Signalausgang des Stromverstärkers 3, der mit dem Bezugszeichen 6 bezeichnet wird, kann entweder ein Strom oder eine Spannung, die charakteristisch für die Gaskonzentration ist, abgegriffen werden. Die Ansteuerelektronik 2 ist, wie hier nicht dargestellt ist, dauernd mit der Spannungsversorgung 5 verbunden, um das periodische Ein- und Ausschalten des Schalters 4 durchzuführen. Der Schalter 4 ist hier ein Transistorschalter, es sind jedoch auch andere Schalter möglich.

Figur 2 zeigt ein zweites Blockschaltbild der erfindungsgemäßen Vorrichtung. Die elektrochemische Zelle 1 ist mit der Gegenelektrode C an einen positiven Eingang eines Operationsverstärkers 7 und mit der Meßelektrode W an den negativen Eingang des Operationsverstärkers 7 angeschlossen. Der positive Eingang des Operationsverstärkers 7 wird ferner an eine Referenzspannung V' 16 angeschlossen. Im allgemeinen wird als Referenzspannung V' = 0V (Masse) gewählt. V' kann aber auch auf einen Wert von größer 0V eingestellt werden, um Offset-Ströme der elektrochemischen Zelle abgleichen zu können. Es können bei elektrochemischen Zellen Offset-Ströme in beide Stromrichtungen auftreten.

Die Meßelektrode W ist weiterhin an einen Widerstand 8 angeschlossen. Der Operationsverstärker 7 wird hier als Stromverstärker betrieben. Der Widerstand 8 ist auf seiner anderen Seite an einen Ausgang des Operationsverstärkers 7 angeschlossen. Hier befindet sich eine Ausgangselektrode 9, an der die verstärkte Spannung bzw. der verstärkte Strom abgreifbar ist. Ein Spannungsversorgungsanschluß des Operationsverstärkers 7 ist gegen Masse geschaltet, während der andere wiederum an den Schalter 4 angeschlossen ist, der von der Ansteuerelektronik 2 gesteuert ist. Diese Stromverstärkerschaltung kann auch mit symmetrischer Spannungsversorgung betrieben werden.

Auf der anderen Seite des Schalters 4 befindet sich wiederum die Spannungsversorgung 5, die selbst auf ihrer anderen Seite gegen Masse verbunden ist.

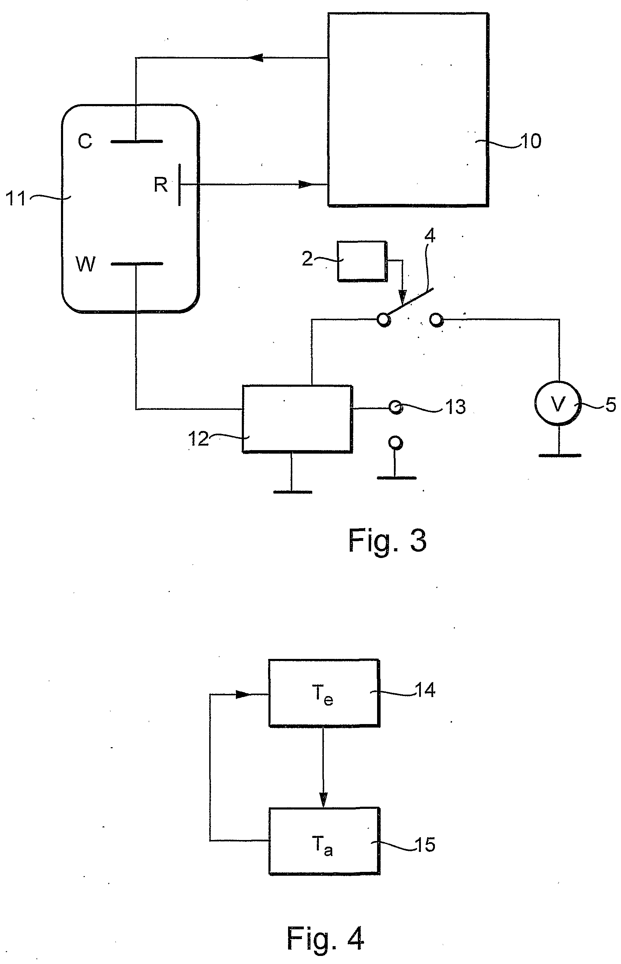

Figur 3 zeigt ein drittes Blockschaltbild der erfindungsgemäßen Vorrichtung. Eine elektrochemische Zelle 11 weist eine Gegenelektrode auf, die an einen Ausgang eines Potentiostaten 10 angeschlossen ist. Eine Referenzelektrode R ist an einen Eingang des Potentiostaten 10 angeschlossen. Eine Meßelektrode W ist an einen Eingang eines Stromverstärkers 12 angeschlossen, dessen Signalausgang 13 dazu dient, das verstärkte Meßsignal abzugreifen. Der Stromverstärker 12 ist bezüglich seiner Versorgungsspannung einmal gegen Masse angeschlossen und zum anderen an den Schalter 4, der wiederum auf seiner anderen Seite an der Spannungsversorgung 5 angeschlossen ist, die wiederum gegen Masse angeschlossen ist. Der Schalter 4 wird von der Ansteuerelektronik 2 angesteuert.

In Figur 4 ist als Flußdiagramm das erfindungsgemäße Verfahren dargestellt. Die Auswerteschaltung, die den Stromverstärker 3 bzw. 12 aufweist, wird über den Schalter 4 durch das Schließen des Schalters 4 von der Ansteuerelektronik 2 mit der Spannungsversorgung 5 eingeschaltet und zwar für die Einschaltzeit Te. Diese beträgt hier 9 ms. Nach Ablauf der Einschaltdauer Te wird die Spannungsversorgung 5 durch Öffnen des Schalters 4 für die Ausschaltdauer Ta ausgeschaltet. Die Ausschaltdauer Ta ist größer als die Einschaltdauer Te. Dies wird periodisch durchgeführt.

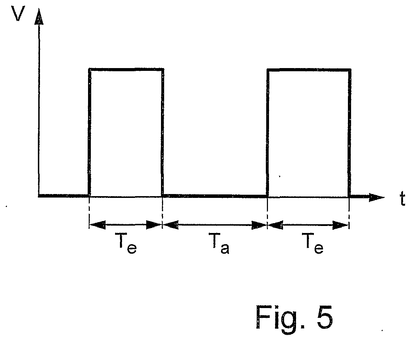

In Figur 5 ist als Spannungszeitdiagramm die am Stromverstärker 3 anliegende Versorgungsspannung dargestellt. Die Versorgungsspannung wird für die Zeitdauer Te eingeschaltet und jeweils für die Zeitdauer Ta ausgeschaltet. Dies wiederholt sich periodisch.

## Patentansprüche

1. Verfahren zum Betrieb einer Auswerteschaltung für eine elektrochemische Zelle (1), die mit der Auswerteschaltung verbunden ist, wobei die Auswerteschaltung einen Stromverstärker (3,7,12), und einen Schalter (4) aufweist, und wobei die Auswerteschaltung periodisch für eine erste Zeit (Te) durch Einschalten einer Spannungsversorgung (5) mittels des Schalters (4) eingeschaltet wird und für eine zweite Zeit (Ta) durch Ausschalten der Spannungsversorgung (5) mittels des Schalters (4) ausgeschaltet wird, wobei das Verhältnis zwischen der ersten und der zweiten Zeit kleiner eins gewählt wird, die elektrochemische Zelle (1) eine bei einer chemischen Reaktion erzeugte Ladungsmenge bei ausgeschalteter Auswerteschaltung speichert und eine Konzentration eines nachzuweisenden Gases durch Messen desjenigen Stromes, der bei eingeschalteter Auswerteschaltung fließt, bestimmt wird.

2. Verfahren nach Anspruch 1, **dadurch gekennzeichnet, dass** ein Sensorsignal von der elektrochemischen Zelle (1) eine Stromverstärkung durch die Auswerteschaltung erfährt.

3. Verfahren nach Anspruch 1 oder 2, **dadurch gekennzeichnet, dass** die erste Zeit (Te) so gewählt wird, dass die erste Zeit (Te) kleiner als die Entladungszeitkonstante der elektrochemischen Zelle ist.

4. Vorrichtung zur Bestimmung einer Konzentration eines nachzuweisenden Gases, die eine elektrochemische Zelle (1), eine Auswerteschaltung und eine Ansteuerelektronik (2) aufweist, wobei die elektrochemische Zelle (1) mit der Auswerteschaltung verbunden ist, wobei die Auswerteschaltung einen Stromverstärker (3,7,12) und einen Schalter (4) aufweist, wobei die Ansteuerelektronik (2) ausgebildet ist, den Schalter (4) so zu steuern, dass eine Spannungsversorgung (5) der Auswerteschaltung periodisch für die erste Zeit (Te) eingeschaltet wird und für die zweite Zeit (Ta) ausgeschaltet wird und die Auswerteschaltung im ausgeschalteten Zustand hochohmige Eingänge aufweist, so dass die elektrochemische Zelle (1) eine bei einer chemischen Reaktion erzeugte Ladungsmenge bei ausgeschalteter Auswerteschaltung speichert, wobei das Verhältnis zwischen der ersten und der zweiten Zeit kleiner eins ist, und die Auswerteschaltung derart ausgebildet ist eine Konzentration eines nachzuweisenden Gases durch Messen desjenigen Stroms, der bei eingeschalteter Auswerteschaltung fließt, zu bestimmen.

**5.** Vorrichtung nach Anspruch 4, **dadurch gekennzeichnet, dass** der Stromverstärker (7) einen Operationsverstärker (7) aufweist.

**6.** Vorrichtung nach Anspruch 4 oder 5, **dadurch gekennzeichnet, dass** die elektrochemische Zelle (1) eine Referenzelektrode (R) aufweist, die von einem Potentiostaten (10) angesteuert wird, um ein Potential an einer Meßelektrode einer elektrochemischen Zelle (11) einzustellen.

**7.** Verwendung der Vorrichtung nach einem der Ansprüche 4 bis 6 in einem Brandmelder, wobei die elektrochemische Zelle als Gassensor zur Detektion von Brandgasen eingesetzt wird.


**Claims**

**1.** Method for operating an evaluation circuit for an electrochemical cell (1) connected to the evaluation circuit, wherein the evaluation circuit comprises a current amplifier (3, 7, 12) and a switch (4), and wherein the evaluation circuit is switched on periodically for a first time (Te) by the switching on of a voltage supply (5) by means of the switch (4) and is switched off for a second time (Ta) by the switching off of the voltage supply (5) by means of the switch (4), wherein the ratio between the first time and the second time is chosen to be less than one, the electrochemical cell (1) stores a quantity of charge generated during a chemical reaction with the evaluation circuit switched off, and a concentration of a gas to be detected is determined by measurement of that current which flows with the evaluation circuit switched on.

**2.** Method according to Claim 1, **characterized in that** a sensor signal from the electrochemical cell (1) experiences a current amplification by the evaluation circuit.

**3.** Method according to Claim 1 or 2, **characterized in that** the first time (Te) is chosen such that the first time (Te) is less than the discharge time constant of the electrochemical cell.

**4.** Device for determining a concentration of a gas to be detected, said device comprising an electrochemical cell (1), an evaluation circuit and drive electronics (2), wherein the electrochemical cell (1) is connected to the evaluation circuit, wherein the evaluation circuit comprises a current amplifier (3, 7, 12) and a switch (4), wherein the drive electronics (2) are configured to control the switch (4) such that a voltage supply (5) of the evaluation circuit is switched on periodically for the first time (Te) and is switched off for the second time (Ta), and the evaluation circuit in the switched-off state has high-impedance inputs, such that the electrochemical cell (1) stores a quantity of charge generated during a chemical reaction with the evaluation circuit switched off, wherein the ratio between the first time and the second time is less than 1, and the evaluation circuit is configured in a such a way as to determine a concentration of a gas to be detected by measurement of that current which flows with the evaluation circuit switched on.

**5.** Device according to Claim 4, **characterized in that** the current amplifier (7) comprises an operational amplifier (7).

**6.** Device according to Claim 4 or 5, **characterized in that** the electrochemical cell (1) comprises a reference electrode (R), which is driven by a potentiostat (10) in order to set a potential at a measuring electrode of an electrochemical cell (11).

**7.** Use of the device according to any of Claims 4 to 6 in a fire alarm, wherein the electrochemical cell is used as a gas sensor for detecting combustion gases.


**Revendications**

**1.** Procédé pour faire fonctionner un circuit d'interprétation pour une cellule électrochimique (1) qui est reliée au circuit d'interprétation, le circuit d'interprétation possédant un amplificateur de courant (3, 7, 12) et un commutateur (4), le circuit d'interprétation étant périodiquement mis en circuit pendant une première durée (Te) par mise en circuit d'une tension d'alimentation (5) au moyen du commutateur (4) et mis hors circuit pendant une deuxième durée (Ta) par mise hors circuit de la tension d'alimentation (5) au moyen du commutateur (4),
le rapport entre la première et la deuxième durée étant choisi inférieur à un, la cellule électrochimique (1) accumulant une quantité de charge générée lors d'une réaction chimique lorsque le circuit d'interprétation est hors circuit et une concentration d'un gaz à déceler étant déterminée en mesurant le courant qui circule lorsque le circuit d'interprétation est en circuit.

**2.** Procédé selon la revendication 1, **caractérisé en ce qu'**un signal de capteur de la cellule électrochimique (1) est soumis à une amplification de courant par le circuit d'interprétation.

**3.** Procédé selon la revendication 1 ou 2, **caractérisé**

**en ce que** la première durée (Te) est choisie de telle sorte que la première durée (Te) est inférieure à la constante de décharge de la cellule électrochimique (1).

**4.** Dispositif pour déterminer une concentration d'un gaz à déceler, lequel possède une cellule électrochimique (1), un circuit d'interprétation et une électronique de commande (2), la cellule électrochimique (1) étant reliée au circuit d'interprétation, le circuit d'interprétation possédant un amplificateur de courant (3, 7, 12) et un commutateur (4), l'électronique de commande (2) étant configurée pour commander le commutateur (4) de telle sorte que le circuit d'interprétation est périodiquement mis en circuit pendant une première durée (Te) et mis hors circuit pendant une deuxième durée (Ta) et le circuit d'interprétation à l'état hors circuit possédant des entrées à haute impédance de sorte que la cellule électrochimique (1) accumule une quantité de charge générée lors d'une réaction chimique lorsque le circuit d'interprétation est hors circuit, le rapport entre la première et la deuxième durée étant inférieur à un et le circuit d'interprétation étant configuré pour déterminer une concentration d'un gaz à déceler en mesurant le courant qui circule lorsque le circuit d'interprétation est en circuit.

**5.** Dispositif selon la revendication 4, **caractérisé en ce que** l'amplificateur de courant (7) possède un amplificateur opérationnel (7).

**6.** Dispositif selon la revendication 4 ou 5, **caractérisé en ce que** la cellule électrochimique (1) possède une électrode de référence (R) qui est commandée par un potentiostat (10) afin de régler un potentiel au niveau d'une électrode de mesure d'une cellule électrochimique (11).

**7.** Utilisation du dispositif selon l'une des revendications 4 à 6 dans un avertisseur d'incendie, la cellule électrochimique étant utilisée comme détecteur de gaz pour la détection des gaz d'incendie.

Fig. 1

Fig. 2

## Fig. 3

## Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0269794 A2
- GB 2343518 A